# EUROPÄISCHE PATENTANMELDUNG

(11) **EP 4 111 870 A1**
(43) Veröffentlichungstag der Anmeldung: **04.01.2023**
(21) Anmeldenummer: 21183308.2
(22) Anmeldetag: 01.07.2021
(51) Int. Cl.: A23L 33/105, A23L 33/175, B65B 29/02, B65D 85/804

(54) **ORALER BEUTEL ZUR ABGABE VON WIRKSTOFFEN**

(71) Anmelder: Pely-tex GmbH & Co KG, 23812 Wahlstedt (DE)
(72) Erfinder: RÖTTGER, Henning, 24568 Kaltenkirchen (DE); KUNZET, Sebastian, 24558 Henstedt-Ulzburg (DE)
(74) Vertreter: Hauck Patentanwaltspartnerschaft mbB

(57) **Zusammenfassung**

Oraler Beutel zur Platzierung im Mundvorhof zur Aufnahme einer Wirkstoffzusammensetzung durch den Menschen, umfassend eine Beutelhülle aus einem für Speichel durchlässigen Material und eine Koffein und Taurin enthaltende Wirkstoffzusammensetzung.

## Beschreibung

Die Erfindung betrifft einen oralen Beutel zur Platzierung im Mundvorhof zur Aufnahme eines Wirkstoffes oder einer Wirkstoffzusammensetzung durch den Menschen.

In der heutigen Gesellschaft ist das Bedürfnis, Müdigkeit zu überwinden und kurzfristig einen Leistungsschub zu bekommen, in Beruf und Freizeit zunehmend verbreitet. Dabei wird zunehmend Wert auf Mobilität gelegt, sodass Heißgetränke wie Kaffee nicht immer zur Anregung und Steigerung der Leistungsfähigkeit geeignet sind. Hier haben sich sogenannte Energydrinks, wie Red Bull^{®} oder Monster^{®}, die relativ hohe Konzentrationen an Wirkstoffen wie Koffein und Taurin enthalten, etabliert. Diese Energydrinks werden in Getränkedosen aus Blech angeboten und können relativ einfach mitgeführt werden. Neben den Energydrinks gibt es zunehmend auch Süßwaren (Bonbons) mit einem hohen Koffeingehalt, die gerne von Kraftfahrern gegen Müdigkeit eingesetzt werden.

Gerade im Bereich des Sports und anderen Aktivitäten ist das Mitführen von Getränkedosen wenig vorteilhaft, z.B. bei einem Langstreckenlauf, beim Klettern etc. Auch der Verzehr eines Bonbons kann beim Sport oder anderer körperlicher Anstrengung kritisch sein, da die Gefahr besteht, dass dieses in die Luftröhre gelangt.

Die WO 2010/114445 A1 beschreibt ein Pflanzenfaserprodukt, das eine Mischung umfasst, die zumindest Pflanzenfasern und mindestens eine zusätzliche Substanz enthält, die bei Benutzung aus dem Produkt freigesetzt werden soll. Das Produkt enthält eine Alginatzusammensetzung, die in dem Produkt verteilt ist und zumindest Wasser, Alginat und die zusätzliche Substanz umfasst. Die Zusammensetzung enthält eine Alginatmatrix und hält zumindest den größten Teil der zusätzlichen Substanz zurück, solange die Matrix intakt ist. Die Alginatmatrix ist so gebildet, dass sie in der chemischen und physikalischen Umgebung im Mund eines Anwenders zerfällt und/oder sich auflöst. Die zusätzliche Substanz ist beispielsweise Koffein. Das Produkt kann wie feuchter Schnupftabak Im Mund des Anwenders platziert werden, beispielsweise unter den Lippen. Das Produkt kann in Schachteln in loser Form oder in Form von Portionsbeuteln verpackt werden, wie Prisen von Schnupftabak.

Davon ausgehend liegt der Erfindung die Aufgabe zugrunde, ein Aufputschmittel in einer Form zur Verfügung zu stellen, die einen einfachen Transport ermöglicht, keiner Flüssigkeitszufuhr bedarf und auch während körperlicher Aktivitäten, bei denen eine Aufnahme über klassische Formate wie Getränkedosen, Bonbons oder Pulver schwierig oder nicht möglich ist, sicher eingenommen werden kann.

Die Erfindung wird durch einen oralen Beutel gemäß Anspruch 1 gelöst. Vorteilhafte Ausführungsarten des Beutels sind in den Unteransprüchen und in der Beschreibung angegeben.

Der erfindungsgemäße orale Beutel zur Platzierung im Mundvorhof zur Aufnahme einer Wirkstoffzusammensetzung durch den Menschen umfasst eine Beutelhülle aus einem für Speichel durchlässigen Material und eine Koffein und Taurin enthaltende Wirkstoffzusammensetzung.

Portionierter Snus ist eine etablierte Darreichungsform von nikotinhaltigen Substraten (in der Regel Tabak oder auch synthetische nikotinhaltige Ersatzstoffe), die in einem kleinen Beutel verpackt sind und vom Anwender zwischen Zahnfleisch und Lippe oder Backe geklemmt werden. Das Material des Beutels ist für Speichel permeabel, sodass das Nikotin und Geschmacksstoffe aus dem Substrat extrahiert werden, schnell über die Schleimhäute bzw. über den Magen in den Blutkreislauf des Anwenders gelangen und dort ihre Wirkung entfalten.

Erfindungsgemäß ist eine Taurin und Koffein enthaltende oder daraus bestehende Wirkstoffzusammensetzung in dieses Verpackungsformat eingebracht. Damit lässt sich diese Wirkstoffzusammensetzung auch von Sportlern und anderen Personen problemlos transportieren und kann auch bei aktiver körperlicher Tätigkeit sicher im Mund positioniert werden, sodass die Wirkstoffe über den Speichel aufgenommen werden können. Durch die Freisetzung des Gemisches aus Taurin und Koffein im Mundraum in direktem Kontakt zur Mundschleimhaut können die Wirkstoffe vom Körper aufgenommen werden, ohne mit der Magensäure in Kontakt zu kommen, wie es bei Energydrinks der Fall ist. Somit wird es auch möglich, magensäureempfindliche Wirkstoffe aufzunehmen. Bei den Aktivitäten müssen die Personen (Sportler) den kleinen Beutel mitführen, nicht aber eine Flüssigkeitsdose. Die Wirkstoffe werden über einen längeren Zeitraum aus dem im Mundraum sicher fixierten Beutel freigesetzt. Im Gegensatz zu einem Bonbon kann der Beutel nicht versehentlich bei der Aktivität verschluckt werden oder gar in die Atemwege gelangen. Dies ist besonders bei Sportlern etc. von Bedeutung. Im Vergleich zu einem Pulver kann die in einem oralen Beutel verpackte Wirkstoffzusammensetzung durch den Speichel herausgelöst und ohne zusätzliche Flüssigkeit sicher aufgenommen werden.

Gemäß einer Ausführungsart der Erfindung umfasst die Wirkstoffzusammensetzung einen oder mehrere der nachfolgenden weiteren Inhaltsstoffe: Zucker, Traubenzucker, Süßstoff, Kohlensäure, Zitronensäure, Natriumzitrat, Glucuronolacton, Vitamine (z.B. Vitamin B6 und/oder Vitamin B12), Mineralstoffe, Aromastoffe, Nikotin, Niacin, Nikotinamid, Acetylsalicylsäure, Farbstoff. Gemäß einer weiteren Ausführungsart der Erfindung umfasst die Wirkstoffzusammensetzung die Kombination aus Koffein und Acetylsalicylsäure, weil diese die Wirksamkeit der Acetylsalicylsäure erhöht.

Wie bereits erwähnt, umfasst die Wirkstoffzusammensetzung vorzugsweise magensäureempfindliche Wirkstoffe. Hierbei handelt es sich um Wirkstoffe, die, bevor sie über den Magen in den Blutkreislauf des Anwenders gelangen, im Wesentlichen oder vollständig von der Magensäure zersetzt werden, sodass sie im Blutkreislauf ihre Wirkung nicht entfalten können.

Gemäß einer Ausführungsart besteht die Wirkstoffzusammensetzung aus Koffein und Taurin oder besteht die Wirkstoffzusammensetzung im Wesentlichen aus Koffein und Taurin. Gemäß einer weiteren Ausführungsart besteht die Wirkstoffzusammensetzung aus Koffein, Taurin und Zucker oder besteht die Wirkstoffzusammensetzung im Wesentlichen aus Koffein, Taurin und Zucker.

Gemäß einer weiteren Ausführungsart ist die Wirkstoffzusammensetzung in einer bestimmten Dosis im Beutel enthalten. Bei einer weiteren Ausführungsart umfasst die Dosis folgende Mengen der Inhaltsstoffe:
- 50 bis 120 mg Koffein, vorzugsweise 70 bis 90 mg Koffein, vorzugsweise 80 mg Koffein und/oder
- 0,5 bis 1,5 g Taurin, vorzugsweise 0,8 bis 1,2 g Taurin, vorzugsweise 1 g Taurin, und/oder
- 15 bis 40 g Zucker, vorzugsweise 20 bis 30 g Zucker, vorzugsweise 25 g Zucker.

Die vorgenannten Mengen werden nachfolgend als "starke Dosis" bezeichnet.

Gemäß einer weiteren Ausführungsart enthält der Beutel die Wirkstoffzusammensetzung in einer Dosis, die geringer ist als die starke Dosis. Gemäß weiteren Ausführungsarten betragen die Mengen der Wirkstoffe in dem oralen Beutel Dreiviertel oder die Hälfte oder ein Achtel oder ein Zehntel oder ein Zwanzigstel der obigen Mengen der starken Dosis. Hierdurch können verschiedene orale Beutel mit abgestufter Dosis der Wirkstoffzusammensetzung bereitgestellt werden.

Gemäß einer weiteren Ausführungsart ist die Wirkstoffzusammensetzung so ausgebildet und beschaffen, dass es sich im Speichel während einer vorgegebenen Einwirkungsdauer, vorzugsweise im Bereich von einer Stunde, vorzugsweise von eins bis 40 Minuten, vorzugweise von fünf bis 30 Minuten, auflöst, wodurch bis zum Ende der vorgegebenen Einwirkungsdauer eine Freisetzung der Wirkstoffzusammensetzung erfolgt. Gemäß einer weiteren Ausführungsart ist die Wirkstoffzusammensetzung so ausgebildet und beschaffen, dass es sich gemäß einer vorgegebenen Kinetik auflöst. Hierdurch kann insbesondere erreicht werden, dass die Wirkstoffzusammensetzung durch Auflösen schnell, verzögert oder verlangsamt (retardiert) freigesetzt wird.

Gemäß einer weiteren Ausführungsart umfasst der Beutel ein Granulat, das aus der Wirkstoffzusammensetzung besteht oder diese enthält. Gemäß einer weiteren Ausführungsart weist die Beutelhülle eine mittlere Porengröße auf, die die mittlere Partikelgröße der Korngrößenverteilung des Granulats unterschreitet. Gemäß einer weiteren Ausführungsart ist die mittlere Porengröße der Beutelhülle kleiner als das 0,25-Quantil, vorzugsweise kleiner als das 0,1-Quantil der Korngrößenverteilung des Granulats. Hierdurch wird erreicht, dass der Beutel das Granulat vollständig oder nahezu vollständig zurückhält, sodass die Wirkstoffzusammensetzung nur aufgelöst im Speichel durch die Beutelhülle aus dem Beutel heraustransportiert wird.

Die mittlere Porengröße der Beutelhülle wird optisch gemessen, vorzugsweise mithilfe eines (Licht-)Mikroskopes. Die mittlere Porengröße wird als arithmetischer Mittelwert der gemessenen Porengrößen ermittelt.

Die Korngrößenverteilung des Granulats wird optisch gemessen, vorzugsweise mithilfe eines (Licht-)Mikroskopes.

Die Freisetzung der Wirkstoffzusammensetzung kann insbesondere durch die Zusammensetzung, Korngrößenverteilung oder eine Beschichtung des Granulats gesteuert werden.

Gemäß einer weiteren Ausführungsart ist Taurin in Form eines Pulvers in dem Granulat enthalten. Taurin ist eine farblose kristalline Substanz, die sich bei Temperaturen ab 300°C zersetzt und bei einer Temperatur von 328°C schmilzt. Das Taurin kann der Wirkstoffzusammensetzung in Form eines Pulvers aus kristallinen Teilchen zugegeben werden.

Gemäß einer weiteren Ausführungsart ist das Koffein in Form eines Pulvers in dem Granulat enthalten. Hierfür kann beispielsweise kommerziell angebotenes 100 % reines Koffein-Pulver in pharmazeutischer Qualität verwendet werden.

Gemäß einer weiteren Ausführungsart umfasst die Wirkstoffzusammensetzung ein Additiv und/oder einen Füllstoff und/oder einen Träger.

Gemäß einer weiteren Ausführungsart ist das Additiv ein weiterer Wirkstoff oder anderer Inhaltsstoff der Wirkstoffzusammensetzung und/oder ist der Füllstoff ein inerter Füllstoff. Gemäß einer weiteren Ausführungsart ist das Additiv in Form eines Pulvers in dem Granulat enthalten und/oder ist der Füllstoff in Form eines Pulvers in dem Granulat enthalten und/oder ist der Träger in Form eines Pulvers in dem Granulat enthalten. Gemäß einer weiteren Ausführungsart ist das Additiv Zucker oder ein anderer Inhaltsstoff der Wirkstoffzusammensetzung.

Gemäß einer weiteren Ausführungsart wird Taurin und/oder Koffein in Form eines Granulates mit einem Additiv oder Füllstoff gemischt in die Beutelhülle eingebracht.

Gemäß einer weiteren Ausführungsart wird das Koffein und/oder das Taurin auf einen Träger aufgebracht und der mit Koffein und/oder Taurin beladene Träger in der Beutelhülle angeordnet. Hierfür wird beispielsweise Koffein und/oder Taurin aus einer Lösung auf den Träger aufgebracht und das Lösungsmittel entfernt. Der Träger ist beispielsweise ein Granulat.

Gemäß einer weiteren Ausführungsart umfasst das Granulat Cellulosefaser-Pulpe. Dieses kann mit Koffein und/oder Taurin in Form eines Granulates gemischt oder als Träger für Koffein und/oder Taurin verwendet werden. Cellulosefaser-Pulpe ist ein biologisches Produkt und für die Beimischung zu Nahrungs- und Genussmitteln geeignet.

Gemäß einer weiteren Ausführungsart umfasst das Granulat Pflanzenfasern als Additiv oder Füllstoff oder als Träger für Koffein und/oder Taurin.

Gemäß einer weiteren Ausführungsart umfasst das Granulat Pflanzenfasern, die mit Wirkstoffen und/oder weiteren Inhaltsstoffen beladen sind.

Gemäß einer weiteren Ausführungsart umfasst das Granulat Pflanzenfasern, die Koffein und/oder Taurin und/oder andere Inhaltsstoffe originär enthalten.

Gemäß einer weiteren Ausführungsart besteht die Beutelhülle aus einem Vliesstoff.

Gemäß einer weiteren Ausführungsart umfasst der Vliesstoff Cellulosefasern oder im Wesentlichen oder ausschließlich cellulosische Fasern.

Gemäß einer weiteren Ausführungsart umfassen die cellulosischen Fasern eine oder mehrere der folgenden Fasern: Viskosefasern, Lyocellfasern, Baumwollfasern.

Gemäß einer weiteren Ausführungsart ist der Vliesstoff chemisch verfestigt. Hierdurch kann eine unerwünschte Beschädigung des Vliesstoffes durch den Speichel und ein Austreten der Wirkstoffzusammensetzung aus dem Beutel vermieden werden.

Gemäß einer weiteren Ausführungsart enthält der Vliesstoff eine siegelfähige Komponente. Durch Versiegeln des Vliesstoffes kann der daraus gebildete Beutel geschlossen werden.

Einzelheiten von Vliesstoffen, die als Material für die Beutelhülle des erfindungsgemäßen oralen Beutels verwendet werden können, sind in den europäischen Patenten EP 3 192 380 B1 und EP 3 223 636 B1 beschrieben. In dieser Hinsicht wird Bezug genommen auf die europäischen Patente EP 3 192 380 B1 und EP 3 223 636 B1, deren Inhalt hiermit in diese Anmeldung aufgenommen wird.

Bei dem Vliesstoff handelt es sich beispielsweise um das Produkt "Nonwova CV 29/ viv", das von der Firma pely-tex GmbH & Co. KG, Willy-Pelz-Str. 2-4, 23812 Wahlstedt vertrieben wird.

Gemäß einer weiteren Ausführungsart ist die Permeabilität des Vliesstoffes insbesondere durch mindestens eine der nachfolgenden Maßnahmen eingestellt: Wahl des Vliesbildungsverfahrens, Wahl der Art, des Titers und des Querschnittes der Fasern, Wahl von Art und Menge des Bindemittels, Einstellung der Porengrößenverteilung und der Porendichte des Vliesstoffes durch Kompaktierung des Vliesstoffes. Durch die Wahl des Vliesstoffes und die Einstellung der Permeabilität für Speichel des Vliesbeutels kann die Freigabe der Wirkstoffzusammensetzung gesteuert werden. Insbesondere kann durch Einstellung der Permeabilität des Vliesstoffes eine kontrollierte und gleichmäßige Abgabe der Wirkstoffzusammensetzung auch über einen längeren Zeitraum sichergestellt werden. Dies ist beim herkömmlichen Format der Getränkedose während der Aktivität nicht möglich.

Gemäß einer weiteren Ausführungsart umfasst der Vliesstoff Fasern auf der Basis von Zellulose, ein Bindemittel auf der Oberfläche der Fasern, kompaktierte Zonen und nicht kompaktierte Zonen und ist das Bindemittel zumindest in den kompaktierten Zonen ganz oder teilweise vernetzt und hält die kompaktierten Zonen in dem kompaktierten Zustand fest.

Für Snus-Beutel geeignete Vliesstoffe (z.B. aus chemisch gebundenen, Viskose enthaltende Fasern) zeichnen sich durch ihre thermische Siegelfähigkeit bzw. Siegelfähigkeit unter hohem Druck aus. Herkömmlicherweise werden für Snus-Beutel Vliesstoffe mit maximaler Permeabilität für Geschmacksstoffe verwendet. Ein solches Material hat eine relativ offene Porenstruktur. Durch lokales Verpressen (Prägen) des Materials lässt sich in einem einfachen Kalandrierprozess mit einer Gravurwalze (Prägewalze) und einer Glattwalze der Vliesstoff in einer oder mehreren definierten Zonen kompaktieren und damit die Porenstruktur im Bereich der einen oder mehreren kompaktierten Zonen verschließen. Der Vliesstoff ist ein textiles Flächengebilde und die kompaktierten Zonen sind durch Kompaktieren des Vliesstoffes in senkrechter Richtung zu den beiden Hauptausdehnungsrichtungen des Vliesstoffes gebildet. Das Bindemittel ist zumindest in den kompaktierten Zonen ganz oder teilweise vernetzt, wodurch die kompaktierten Zonen in dem kompaktierten Zustand festgehalten bzw. fixiert werden. Dies kann dadurch erreicht werden, dass beim Zusammenpressen des Vliesstoffes das Bindemittel aufgrund einer Erhöhung von Druck und Temperatur in den kompaktierten Zonen ganz oder teilweise vernetzt wird. Die Vernetzung kann durch einen Temperaturanstieg der Walzen aufgrund der beim Pressen mittels der Walzen freiwerdenden Wärme und/oder durch gezielte Wärmezufuhr bewirkt werden. Der Vliesstoff wird in den kompaktierten Zonen dauerhaft kompaktiert und geschlossen gehalten. Die kompaktierten und verschlossenen Zonen bleiben auch im nassen Zustand bei der oralen Anwendung weitgehend kompaktiert und verschlossen. Somit weisen die kompaktierten Zonen eine gegenüber den nicht kompaktierten Zonen des Vliesstoffes verringerte Permeabilität auf. Die Permeabilität (Stoffdurchgang von Speichel mit Geschmacksstoffen des Tabakmaterials) des Vliesstoffes in den kompaktierten Zonen kann vernachlässigbar gering sein. In den nicht kompaktierten Zonen ist die Permeabilität jedoch nicht bzw. nur partiell durch Verdichtung der Fasern verringert, sodass der Vliesstoff dort seine ursprüngliche bzw. nur teilweise reduzierte Permeabilität beibehalten kann.

Durch gezielte Wahl der kompaktierten und der nicht kompaktierten Zonen lässt sich die gesamte Permeabilität des Vliesstoffes gegenüber dem verwendeten Ausgangsmaterial reduzieren und an die jeweiligen im Snus-Beutel enthaltenen Tabakmaterialien bzw. Tabakersatzstoff anpassen. Durch gezielte Wahl der Struktur der kompaktierten Zonen (Prägestruktur) lässt sich nicht nur die Permeabilität für Geschmacksstoffe einstellen, sondern auch die Biegesteifigkeit, Dehnung, Festigkeit in Längs- und Querrichtung beeinflussen sowie durch Einstellen der dreidimensionalen Oberflächenstruktur die Rauigkeit und damit die Haptik des Beutels beim Entnehmen aus der Packung und bei der oralen Anwendung gezielt modellieren.

Die gezielte Einstellung der genannten Vlieseigenschaften durch lokales Kompaktieren und Verfestigen des Vliesstoffes kann auch dazu genutzt werden, die optische Anmutung des Vliesstoffes gezielt zu beeinflussen und somit optisch diversifizierte Snus-Beutel zu fertigen. Für die Beeinflussung der Permeabilität ist im Wesentlichen nur der Anteil der kompaktierten Zonen an der gesamten Fläche des Vliesstoffes entscheidend. Dies lässt viel gestalterischen Raum, um bei einer vorgegebenen Fläche der kompaktierten Zonen unterschiedliche Strukturen in das Vlies zu prägen und so Produkte mit einer maßgeschneiderten Optik (z.B. textile Optik, perforierte Optik, Optik von Leder oder anderer Materialien) oder den Herstellernamen, die Marke, ein Logo, ein Vereinswappen oder eine andere Kennzeichnung aufzuprägen.

Besonders vorteilhaft ist, dass die diversifizierten Eigenschaften des Vliesstoffes in einem nachgelagerten, wenig komplexen Bearbeitungsschritt eingestellt werden können, wobei als Ausgangsprodukt stets derselbe Vliesstoff verwendet werden kann.

Gemäß einer Ausführungsart der Erfindung ist der Vliesstoff ein chemisch verfestigter Vliesstoff. Bei dem chemisch verfestigten Vliesstoff sind die Fasern über ein darauf aufgebrachtes Bindemittel an Kontaktpunkten miteinander verbunden. Der chemisch verfestigte Vliesstoff umfasst ein chemisches Bindemittel. Das chemische Bindemittel ist ein zumindest teilweise vernetzbares Bindemittel. Beim Vernetzen des Bindemittels werden aus Monomeren oder kurzkettigen Molekülen langkettige Moleküle gebildet, die miteinander vernetzt sein können und ein Polymer bilden. Gemäß einer Ausführungsart werden die kompaktierten Zonen durch dasselbe Bindemittel dauerhaft in dem kompaktierten Zustand fixiert. Hierfür kann bei der Herstellung des Vliesstoffes ein Bindemittel eingesetzt werden, das beim Trocknen chemisch zu einem Duroplast vernetzt und die Fasern an den Kontaktpunkten miteinander verbindet, wobei allerdings die Vernetzung nur teilweise erfolgt, sodass noch vernetzbare Komponenten verbleiben. Beim Kompaktieren des Vliesstoffes durch Prägen kann der Druck und die Temperatur lokal erhöht werden, sodass das Bindemittel im Bereich der Prägezonen vernetzt und eine dauerhaft kompaktierte Struktur bildet, die über eine gewisse Nassfestigkeit verfügt.

Gemäß einer anderen Ausführungsart ist der Vliesstoff ein mechanisch verfestigter Vliesstoff. Gemäß einer weiteren Ausführungsart ist der Vliesstoff durch Vernadeln oder durch Wasserstrahlen mechanisch verfestigt. Der mechanisch verfestigte Vliesstoff ist zusätzlich mit dem Bindemittel versehen. Die kompaktierten Zonen werden durch Vernetzung des Bindemittels dauerhaft im kompaktierten Zustand festgehalten.

Gemäß einer Ausführungsart weist der Beutel Siegelnähte auf, in denen einander überlappende Bereiche des Vliesstoffes durch vernetztes Bindemittel miteinander verbunden sind. Hierfür wird das Bindemittel beim Siegeln der Siegelnähte durch Anwendung von Druck und Temperatur auf den Vliesstoff vernetzt. Für die Herstellung der Siegelnähte kann noch nicht vernetztes Bindemittel des Vliesstoffes genutzt werden. Dies können noch nicht vernetzte Anteile des Bindemittels in den kompaktierten und/oder den nicht kompaktierten Zonen sein.

Zur sprachlichen Vereinfachung ist vorstehend angegeben, dass der Beutel einen Vliesstoff mit kompaktierten Zonen und nicht kompaktierten Zonen umfasst. Damit sind sowohl Ausführungsformen bezeichnet, bei denen der Vliesstoff des Beutels mehrere kompaktierte Zonen und mehrere nicht kompaktierte Zonen umfasst, als auch Ausführungsarten, bei denen der Vliesstoff mehrere kompaktierte Zonen und nur eine einzige nicht kompaktierte Zone oder nur eine einzige kompaktierte Zone und mehrere nicht kompaktierte Zonen oder nur eine einzige kompaktierte Zone und eine einzige nicht kompaktierte Zone umfasst.

Gemäß einer Ausführungsart umfasst der Vliesstoff eine Vielzahl von voneinander getrennten kompaktierten Zonen innerhalb einer zusammenhängenden nicht kompaktierten Zone. Bei dieser Ausführungsart bildet die nicht kompaktierte Zone eine zusammenhängende Grundfläche, in der die voneinander getrennten kompaktierten Zonen angeordnet sind.

Gemäß einer Ausführungsart umfasst der Vliesstoff eine Vielzahl von voneinander getrennten, nicht kompaktierten Zonen innerhalb einer zusammenhängenden kompaktierten Zone. Bei dieser Ausführungsart bildet die zusammenhängende kompaktierte Zone eine Grundfläche, in der die voneinander getrennten nicht kompaktierten Zonen angeordnet sind.

Gemäß einer weiteren Ausführungsart umfasst der Vliesstoff eine Vielzahl von kompaktierten Zonen und eine Vielzahl von nicht kompaktierten Zonen zwischen den kompaktierten Zonen. Beispielsweise sind die kompaktierten Zonen und die nicht kompaktierten Zonen schachbrettartig angeordnet, wobei die kompaktierten Zonen wie die dunklen Flächen und die kompaktierten Zonen wie die hellen Flächen des Schachbrettmusters angeordnet sind.

Gemäß einer weiteren Ausführungsart weisen verschiedene Abschnitte des Vliesstoffes auf verschiedene der zuvor beschriebenen Arten ausgebildete kompaktierte und nicht kompaktierte Zonen auf. Beispielsweise ist die eine Seite des Beutels auf eine andere Art ausgebildet als die andere Seite.

Gemäß einer weiteren Ausführungsart weisen die kompaktierten Zonen und/oder die nicht kompaktierten Zonen eine oder mehrere der nachfolgenden Formen auf: mehreckig, kreisförmig, oval, kreuzförmig, streifenförmig, wellenförmig (z.B. in Form einer Sinus-, Rechteck-, Dreieck- oder Sägezahnschwingung).

Gemäß einer weiteren Ausführungsart weist der Beutel auf einer großflächigen Seite in einem Überlappungsbereich des Vliesstoffes eine in Längsrichtung verlaufende Siegelnaht und an den beiden Querseiten in den Überlappungsbereichen des Vliesstoffes in Querrichtung verlaufende Siegelnähte auf. Der Beutel kann an den in Längsrichtung und in Querrichtung verlaufenen Siegelnähten mit hohen Ausbringungsmengen als Schlauchbeutel hergestellt werden.

Gemäß einer weiteren Ausführungsart nehmen die verpressten Zonen 5 % bis 95 % der Oberfläche des Vliesstoffes ein und nehmen die unverpressten Zonen 95 % bis 5 % der Oberfläche des Vliesstoffes ein.

Gemäß einer weiteren Ausführungsart weist der trockene Vliesstoff in Maschinenrichtung eine Festigkeit von 10 bis 100 N/50 mm und/oder in Querrichtung eine Festigkeit von 5 bis 50 N/50 mm auf.

Die Festigkeiten beziehen sich auf eine Ermittlung nach EDANA WSP 110.4.

Gemäß einer weiteren Ausführungsart weist der trockene Vliesstoff in Maschinenrichtung eine Dehnung von 5 bis 50 % und quer zur Maschinenrichtung eine Dehnung von 10 bis 100 % auf.

Die Dehnungen beziehen sich auf eine Ermittlung nach EDANA WSP 110.4.

Einzelheiten eines Beutels mit einer Beutelhülle aus einem Vliesstoff mit kompaktierten Zonen und nicht kompaktierten Zonen zur Steuerung der Porösität und Verfahren zum Herstellen eines solchen Beutels sind in der europäischen Patentanmeldung EP 21 183 302.5 vom 1. Juli 2021 beschrieben. In dieser Hinsicht wird Bezug genommen auf die europäische Patentanmeldung EP 21 183 302.5, deren Inhalt hiermit in diese Anmeldung aufgenommen wird.

Gemäß einer weiteren Ausführungsart ist die Beutelhülle ein poröser Film. Durch die Porösität kann die Permeabilität der Beutelhülle für Speichel und damit die Freigabe des Wirkstoffes gesteuert werden.

Gemäß einer weiteren Ausführungsart weist die Beutelhülle einen Aufdruck aus einer lebensmittelechten Farbe auf. Durch den Aufdruck kann beispielsweise ein Hersteller von Energydrinks das Produkt diversifizieren und über optische Signale auf dem Beutel mit dem Konsumenten kommunizieren. Für die Applikation von Aufputschmitteln oder Geschmacksstoffen lassen sich weitere vorteilhafte Eigenschaften mittels eines bedruckten oralen Beutels umsetzen:
Durch Bedruckung der Beutelhülle kann ein Markenimage kommuniziert werden, was insbesondere für Hersteller von Energydrinks vorteilhaft ist.

Durch Bedrucken mit einer geeigneten Farbe, die langsam durch den Speichel herausgewaschen wird, kann eine Art Verbrauchsanzeige umgesetzt werden, die durch die Entfärbung signalisiert, dass der Wirkstoff verbraucht wird.

Gemäß einer weiteren Ausführungsart ist der Aufdruck, die Permeabilität des Materials der Beutelhülle und die Wirkstoffzusammensetzung so ausgebildet und beschaffen, dass aufgrund der Einwirkung von Speichel der Aufdruck von der Beuteloberfläche zunehmend abgelöst und gerade dann nicht mehr visuell wahrnehmbar ist, wenn die Wirkstoffzusammensetzung durch den Speichel in einem vorgegebenen Ausmaß, vorzugsweise vollständig oder im Wesentlichen, aus dem Beutel extrahiert ist und so den Verbrauchsstatus des Wirkstoffs sichtbar macht.

Gemäß einer weiteren Ausführungsart wird die Hydrophilie/Hydrophobie des Vliesstoffes durch einen Aufdruck eingestellt. Durch Einstellen der Hydrophilie/Hydrophobie wird die Benetzbarkeit des Beutels mit Speichel eingestellt und damit die Freigabe der Wirkstoffzusammensetzung gesteuert.

Ferner umfasst die Erfindung ein Verfahren zum oralen Aufnehmen eines Wirkstoffes, bei dem ein oraler Beutel gemäß einem der Ansprüche 1 bis 18 oder einer der vorstehenden Ausführungsarten im Mundvorhof platziert, mittels Speichel die Wirkstoffzusammensetzung aus dem oralen Beutel extrahiert, über die Schleimhäute und/oder den Magen aufgenommen wird und in den Blutkreislauf des Anwenders gelangt und seine stimulierende Wirkung entfaltet.

Gemäß einer weiteren Ausführungsart wird mittels des Speichels zugleich die Wirkstoffzusammensetzung und die Farbe des Aufdruckes aus der Beutelhülle herausgelöst, wobei gerade dann, wenn der Aufdruck auf der Beuteloberfläche nicht mehr visuell wahrnehmbar ist, die Wirkstoffzusammensetzung zu einem definierten Anteil oder vollständig erschöpft ist.

Schließlich umfasst die Erfindung die Verwendung eines Beutels gemäß einem der Ansprüche 1 bis 18 oder einer der vorstehenden Ausführungsarten, beim Langstreckenlauf, Klettern oder einem anderen Ausdauer- oder Trendsport, bei der der Beutel im Mundvorhof platziert, mittels Speichel die Wirkstoffzusammensetzung aus dem oralen Beutel extrahiert, über die Schleimhäute und/oder den Magen aufgenommen wird und in den Blutkreislauf des Anwenders gelangt und seine stimulierende Wirkung entfaltet.

Über den Beutel ist die Aufnahme von stimulierenden Mitteln bei der Ausübung derartiger körperlicher Aktivitäten möglich, um diese während eines längeren Zeitraumes zu unterstützen, ohne dass der Anwender eine Getränkeflasche oder einen anderen störenden Gegenstand mit sich führen muss, wobei die Gefahr des Verschluckens maßgeblich reduziert ist.

Nachstehend sind Ausführungsarten der Erfindung und ihre vorteilhaften Eigenschaften angegeben:
- Bevorzugtes Material zur Herstellung des oralen Beutels sind siegelfähige Vliesstoffe, die nach dem wetlaid oder chemical bonding Prozess hergestellt werden und siegelfähige Komponenten erhalten. Besonders diese Technologien ermöglichen die Herstellung von Vliesstoffen, die spontan mit Speichel benetzbar sind (in der Regel durch einen Anteil an cellulosischen Fasern) und eine Permeabilität für Speichel aufweisen.
- Beutel für aktive Wirkstoffe deren Permeabilität für Speichel und darin gelöste so eingestellt wird, dass die Wirkstoffe über einen definierten Zeitraum kontrolliert ("verzögert") abgegeben werden. Im Gegensatz zur Aufnahme via Flüssigkeit kann die Wirkung der Wirksubstanz gezielt an die Anwendung angepasst werden. Schnelle Freigabe für den "Kick" und langsame, verzögerte Freigabe für eine kontinuierliche Wirkung (z.B. um ein vorzeitiges Ermüden zu vermeiden). Vliesstoffe, deren Porosität gezielt eingestellt werden kann sind besonders geeignet (z.B. Chembond durch Variation der Bindermenge, Kompaktierung von Vliesstoffen mit thermoplastischen Strukturelementen, Wahl von Fasern mit geeignetem Faserquerschnitt...).

- Ein weiteres Material für geeignete orale Beutel sind poröse Filme mit geeigneter Porengröße und Porendichte. Geeignet sind mikroporöse Folien, die auch in der Mikrofiltration von Getränken verwendet werden.
- Die Bedruckung der Materialien zur Herstellung der oralen Beutel erfolgt mit lebensmittelechten Farben mittels Flexo- oder Digital-Druck. Besonders der digitale Druck bietet die Möglichkeit marken- und anwendungsspezifische mehrfarbige Druckbilder auch auf kleinen Flächeneinheiten aufzubringen. Der Druck kann bei der Erzeugung der Flächenbahnen mit Rapport oder direkt bei der Formierung der Beutel aufgebracht werden.
- Verwendung von Druckfarben, die sich kontrolliert bei der Anwendung herauslösen und so signalisieren wie viel Wirkstoff noch enthalten ist.
- Beutel mit guter Haftung zu Zahnfleisch und Lippe, so dass ein Verrutschen oder Herausrutschen des Beutels bei körperlicher Aktivität vermieden wird und der Beutel nicht versehentlich verschluckt oder eingeatmet werden kann.

Die Erfindung wird nachfolgend anhand der anliegenden Zeichnungen eines Ausführungsbeispieles näher erläutert. In den Zeichnungen zeigen:
- Fig. 1: einen Snus-Beutel in der Vorderansicht;
- Fig. 2: den Snus-Beutel in der Rückansicht;
- Fig. 3: Fotografie eines Vliesstoffs mit kompaktierten und nicht kompaktierten Zonen zur Herstellung des Snus-Beutels;
- Fig. 4: eine kompaktierte Zone innerhalb einer nicht kompaktierten Zone in einem vergrößerten Vertikalschnitt;
- Fig. 5: eine Vielzahl voneinander getrennter kompaktierter Zonen innerhalb einer zusammenhängenden nicht kompaktierten Zone in einer Draufsicht;
- Fig. 6: eine Vielzahl voneinander getrennter nicht kompaktierter Zonen innerhalb einer zusammenhängenden kompaktierten Zone in einer Draufsicht;
- Fig. 7: unterschiedliche Geometrien kompaktierter oder nicht kompaktierter Zonen in einer Draufsicht.

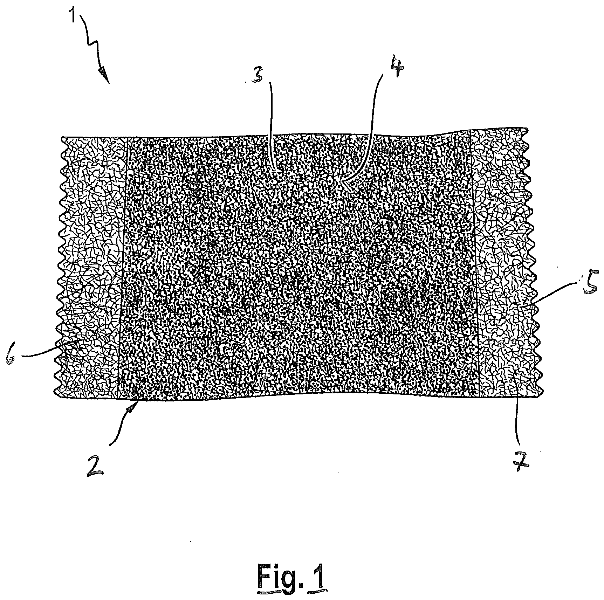

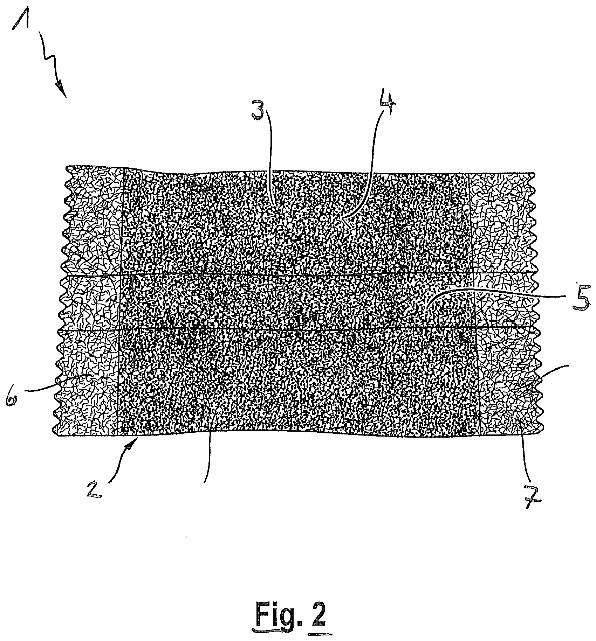

Gemäß Fig. 1 und 2 umfasst ein Snus-Beutel 1 einen Beutel 2 aus einem Vliesstoff 3, in dem eine kleine Menge aus einer Wirkstoffzusammensetzung 4 angeordnet ist. Der Vliesstoff 3 ist aus Viskosefasern hergestellt.

Der Beutel 2 ist als Schlauchbeutel ausgebildet. Ein Streifen aus dem Vliesstoff 3 ist an den Längsrändern übereinandergeschlagen und durch eine längsgerichtete Siegelnaht 5 miteinander verbunden. Bei der Wirkstoffzusammensetzung 4 handelt es sich um eine Wirkstoffzusammensetzung in Form eines Granulates, das aus verschiedenen Pulvern zusammengemischt ist. Die Wirkstoffzusammensetzung enthält Koffein, Taurin, Zucker und ggfs. Zitronensäure und Natriumzitrat als Säuerungsmittel, Niacin, Nikotinamid, Vitamin B6, Vitamin B12. Beispielsweise enthält die Wirkstoffzusammensetzung 80 mg Koffein, 1 g Taurin und 25 g Zucker oder einen Bruchteil (z.B. ein Viertel) der vorgenannten Mengen.

Ferner sind die beiden Querränder des Beutels 2 durch quergerichtete Siegelnähte 6, 7 miteinander verbunden.

Bei der Anwendung wird der Snus-Beutel 1 hinter der Unterlippe und der Oberlippe platziert. Speichel aus der Mundhöhle dringt ein und löst Inhaltsstoffe aus der Wirkstoffzusammensetzung 4 heraus.

Für den Vliesstoff wird beispielsweise das Produkt "Nonwova CV 29/vid" der Firma pely-tex GmbH & Co. KG verwendet. Der Vliesstoff kann in unveränderter Form für die Herstellung des Beutels verwendet werden. Alternativ wird ein modifizierter Vliesstoff verwendet, der erzeugt werden kann, indem das Produkt "Nonwova CV 29/viv" mit kompaktierten und nur nicht kompaktierten Zonen versehen wird.

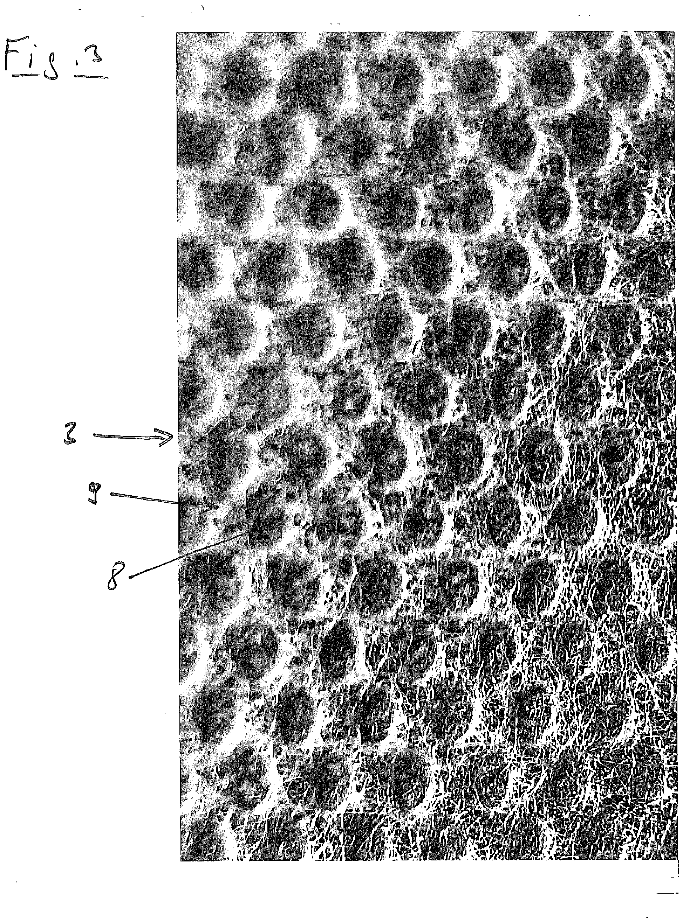

Fig. 3 zeigt eine stark vergrößerte Fotografie des modifizierten Vliesstoffes 3 zur Herstellung des Beutels 2 gemäß Fig. 1 und 2. Der Vliesstoff 3 weist eine Vielzahl voneinander getrennter kompaktierter Zonen 8 innerhalb einer zusammenhängenden, nicht kompaktierten Zone 9 auf, die mittels eines Kalanders mit Gravurwalze und Glattwalze eingeprägt sind. Die Gravurwalze weist hierfür Erhebungen mit sechseckigem bzw. wabenförmigem Querschnitt auf. Der Vliesstoff 3 ist ein chemisch verfestigter Vliesstoff, bei dem die Fasern aus Viskose mit einem Bindemittel versehen sind, das beim Trocknen chemisch zu einem Duroplast vernetzt ist. Beim Einprägen der kompaktierten Zonen 8 werden noch nicht vernetzte Anteile des Bindemittels in den kompaktierten Zonen 8 vernetzt, sodass das vernetzte Bindemittel die kompaktierten Zonen 8 im kompaktierten Zustand festhält.

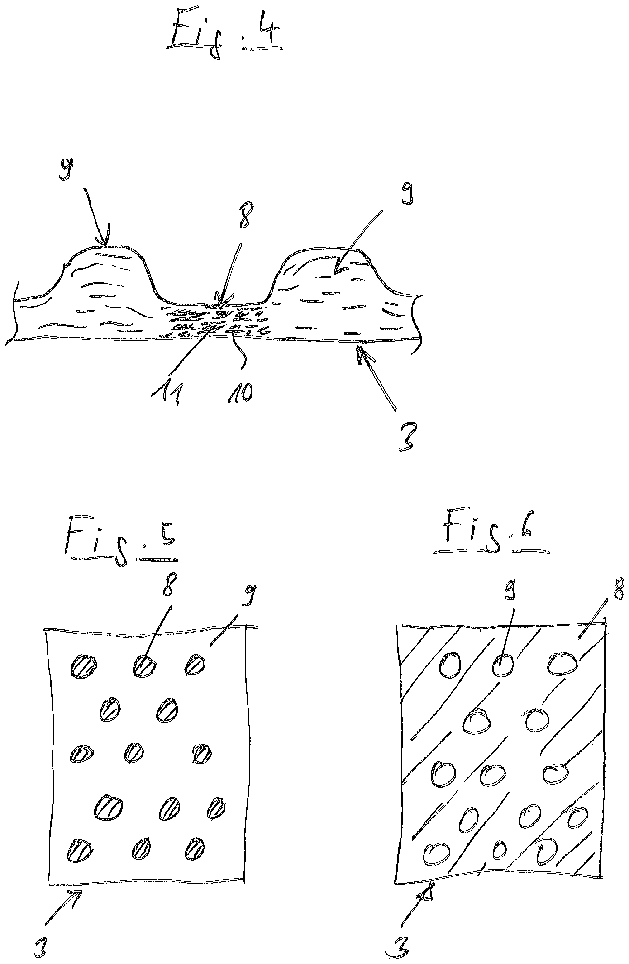

Gemäß Fig. 4 liegen in den kompaktierten Zonen 9 die Fasern 10 eng aneinander an und sind die Bereiche zwischen den Fasern zumindest teilweise durch Bindemittel 11 verschlossen, sodass die Permeabilität des Vliesstoffes 3 für Geschmacksstoffe in den kompaktierten Zonen 8 stark herabgesetzt bzw. vernachlässigbar ist. In der nicht kompaktierten Zone 9 weist der Vliesstoff 3 seine ursprüngliche Struktur und Permeabilität auf. Die Gesamtpermeabilität des Vliesstoffes 3 wird somit gemeinsam durch die kompaktierten Zonen 8 und die nicht kompaktierte Zone 9 bestimmt.

Dementsprechend kann mittels der gewählten Prägestruktur die Permeabilität des Vliesstoffes 3 des Snus-Beutels 1 auf die jeweilige Wirkstoffzusammensetzung 4 abgestimmt werden. Bei der Herstellung der Snus-Beutel 1 mit unterschiedlichem Tabakmaterial 4 kann immer von demselben Vliesstoff 3 ausgegangen werden, der je nach Wirkstoffzusammensetzung 4 mit einer individuellen Prägung versehen wird. Hierfür können unterschiedliche Prägezylinder verwendet werden, mit denen der Gravurzylinder des Kalanders bestückt wird.

Gemäß Fig. 5 kann ein Vliesstoff 3 so mit kompaktierten und nicht kompaktierten Zonen versehen werden, dass er eine Vielzahl voneinander getrennter kompaktierter Zonen 8 aufweist und eine zusammenhängende nicht kompaktierte Zone 9. Dies ist auch bei dem Vliesstoff 3 von Fig. 3 der Fall.

Gemäß Fig. 6 kann alternativ ein Vliesstoff so mit kompaktierten und nicht kompaktierten Zonen versehen werden, dass er eine Vielzahl voneinander getrennter nicht kompaktierter Zonen 9 innerhalb einer zusammenhängenden kompaktierten Zone 8 aufweist.

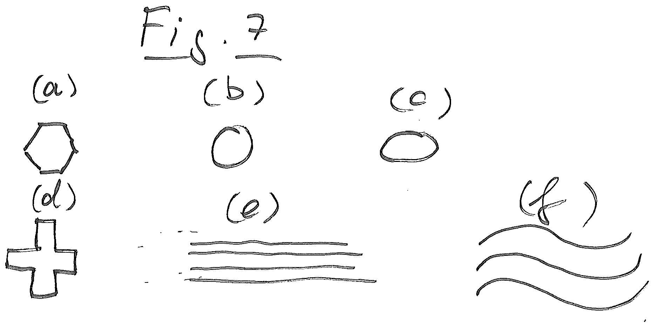

Gemäß Fig. 7a-f können die kompaktierten oder nicht kompaktierten Zonen unterschiedliche Geometrien aufweisen, insbesondere mehreckige (Fig. 7a), kreisförmige (Fig. 7b), ovale (Fig. 7c), kreuzförmige (Fig. 7d), linienförmige (Fig. 7e) oder wellenförmige (Fig. 7f) Geometrien.

In den nachfolgenden Tabellen sind Messungen der Festigkeit, der Dehnung und der Steifigkeit jeweils in Maschinenlaufrichtung und quer dazu sowie Haftreibungskräfte, Haftreibungszahlen, Siegelfestigkeiten, Gleitreibungskräfte und Gleitreibungszahlen sowie Luftdurchlässigkeiten jeweils für einen herkömmlichen Vliesstoff (Standard) und einen erfindungsgemäß mit kompaktierten und nicht kompaktierten Zonen versehenen Vliesstoff (Prägemuster) mit jeweils 29 gsm angegeben. Bei dem Prägemuster handelt es sich um den in Fig. 3 abgebildeten Vliesstoff. Die jeweils angewendeten Standard-Messmethoden sind in den Tabellen angegeben.

Nach den Messungen weist das Prägemuster geringere Festigkeiten MD und CD als der Standard auf. Ferner weist das Prägemuster geringere Dehnungen MD und CD als der Standard auf. Dies ist darauf zurückzuführen, dass beim Prägen des Prägemusters Bindungen des chemisch verfestigten Vliesstoffes zerstört werden und dies nur teilweise durch die Vernetzung von Bindemittel in den komprimierten Zonen kompensiert wird.

Schließlich ist bei dem Prägemuster die Luftdurchlässigkeit gegenüber dem Standard verringert. Dies beruht darauf, dass die Oberfläche des Prägemusters im Bereich der Einprägungen verschlossen ist und hierdurch im Vergleich zum Standard die Luftdurchlässig reduziert wird. Entsprechend der Verminderung der Luftdurchlässigkeit wird auch die Geschmacksdurchlässigkeit für Geschmacksstoffe in Speichelflüssigkeit reduziert.

**Nonwova CV 29/viv**

| **Festigkeit MD** | | **Standard** | **Prägemuster** |
|---|---|---|---|
| *EDANA WSP 110.4* | [N/50mm] | 71 | 46 |
| | [N/50mm] | 68 | 35 |
| | [N/50mm] | 67 | 43 |
| | [N/50mm] | 70 | 44 |
| | [N/50mm] | 69 | 42 |
| **Mittelwert** | **[N/50mm]** | **69** | **42** |
| Standardabweichung | [N/50mm] | 1,65 | 4,32 |
| Variationskoeffizient | [%] | 2,39 | 10,31 |
| Min. | [N/50mm] | 67 | 35 |
| Max. | [N/50mm] | 71 | 46 |

| **Dehnung MD** | | **Standard** | **Prägemuster** |
|---|---|---|---|
| *EDANA WSP 110.4* | [%/50mm] | 8 | 7 |
| | [%/50mm] | 8 | 8 |
| | [%/50mm] | 8 | 7 |
| | [%/50mm] | 8 | 7 |
| | [%/50mm] | 8 | 7 |
| **Mittelwert** | **[%/50mm]** | **8** | **7** |
| Standardabweichung | [%/50mm] | 0,24 | 0,35 |
| Variationskoeffizient | [%] | 2,98 | 4,98 |
| Min. | [%/50mm] | 8 | 7 |
| Max. | [%/50mm] | 8 | 8 |

| **Steifigkeit MD** | | **Standard** | **Prägemuster** |
|---|---|---|---|
| *EDANA WSP 090.3* | [g] | 214 | 94 |
| | [g] | 215 | 111 |
| | [g] | 246 | 111 |
| | [g] | 209 | 96 |
| | [g] | 221 | 103 |
| **Mittelwert** | **[g]** | **221** | **103** |
| Standardabweichung | [g] | 14,61 | 8,03 |
| Variationskoeffizient | [%] | 6,61 | 7,80 |
| Min. | [g] | 209 | 94 |
| Max. | [g] | 246 | 111 |

| **Siegelfestigkeit** | | **Standard** | **Prägemuster** |
|---|---|---|---|
| *DIN EN 29073-3* | [N/50mm] | 7,00 | 10,70 |
| | [N/50mm] | 6,86 | 7,78 |
| | [N/50mm] | 6,49 | 5,32 |
| | [N/50mm] | | |
| | [N/50mm] | | |
| **Mittelwert** | **[N/50mm]** | **6,78** | **7,93** |
| Standardabweichung | [N/50mm] | 0,26 | 2,69 |
| Variationskoeffizient | [%] | 3,88 | 33,95 |
| Min. | [N/50mm] | 6,49 | 5,32 |
| Max. | [N/50mm] | 7,00 | 10,70 |

| **Reibungsmessung** | | **Standard** | **Prägemuster** |
|---|---|---|---|
| Haftreibungskraft *(Force static)* | [N] | 0,880 | 1,790 |
| Haftreibungszahl µ_{S} | | 0,448 | 0,912 |
| | | | |
| Gleitreibungskraft *(Force dynamic)* | [N] | 0,580 | 1,030 |
| Gleitreibungszahl µ_{D} | | 0,297 | 0,525 |

**Nonwova CV 29/viv**

| **Festigkeit CD** | | **Standard** | **Prägemuster** |
|---|---|---|---|
| *EDANA WSP 110.4* | [N/50mm] | 17 | 15 |
| | [N/50mm] | 17 | 12 |
| | [N/50mm] | 17 | 12 |
| | [N/50mm] | 18 | 16 |
| | [N/50mm] | 17 | 14 |
| **Mittelwert** | **[N/50mm]** | **17** | **14** |
| Standardabweichung | [N/50mm] | 0,53 | 1,82 |
| Variationskoeffizient | [%] | 3,07 | 13,29 |
| Min. | [N/50mm] | 17 | 12 |
| Max. | [N/50mm] | 18 | 16 |

| **Dehnung CD** | | **Standard** | **Prägemuster** |
|---|---|---|---|
| *EDANA WSP 110.4* | [%/50mm] | 30 | 30 |
| | [%/50mm] | 37 | 28 |
| | [%/50mm] | 35 | 25 |
| | [%/50mm] | 38 | 32 |
| | [%/50mm] | 35 | 28 |
| **Mittelwert** | **[%/50mm]** | **35** | **28** |
| Standardabweichung | [%/50mm] | 2,82 | 2,60 |
| Variationskoeffizient | [%] | 8,09 | 9,17 |
| Min. | [%/50mm] | 30 | 25 |
| Max. | [%/50mm] | 38 | 32 |

| **Dehnung MD** | | **Standard** | **Prägemuster** |
|---|---|---|---|
| *EDANA WSP 090.3* | [g] | 57 | 48 |
| | [g] | 63 | 41 |
| | [g] | 53 | 43 |
| | [g] | 57 | 41 |
| | [g] | 58 | 43 |
| **Mittelwert** | **[g]** | **58** | **43** |
| Standardabweichung | [g] | 3,57 | 2,86 |
| Variationskoeffizient | [%] | 6,21 | 6,62 |
| Min. | [g] | 53 | 41 |
| Max. | [g] | 63 | 48 |

| **Luftdurchlässigkeit** | | **Standard** | **Prägemuster** |
|---|---|---|---|
| EDANA WSP 070.1 125 *Pa* / *bei 5cm² Prüffläche* | [l/m²/s] | 2.780 | 1.920 |
| | [l/m²/s] | 2.960 | 1.750 |
| | [l/m²/s] | 2.620 | 1 ,620 |
| | [l/m²/s] | 2.860 | 1.610 |
| | [l/m²/s] | 2.920 | 1.490 |
| **Mittelwert** | **[l/m²/s]** | **2.828** | **1.678** |
| Standardabweichung | [l/m²/s] | 134,61 | 163,62 |
| Variationskoeffizient | [%] | 4,76 | 9,75 |
| Min. | [l/m²/s] | 2.620 | 1.490 |
| Max. | [l/m²/s] | 2.960 | 1.920 |

## Patentansprüche

1. Oraler Beutel zur Platzierung im Mundvorhof zur Aufnahme einer Wirkstoffzusammensetzung durch den Menschen, umfassend eine Beutelhülle aus einem für Speichel durchlässigen Material und eine Koffein und Taurin enthaltende Wirkstoffzusammensetzung.

2. Beutel nach Anspruch 1, wobei die Wirkstoffzusammensetzung einen oder mehrere der nachfolgenden weiteren Inhaltsstoffe umfasst: Zucker, Traubenzucker, Süßstoff, Kohlensäure, Zitronensäure, Natriumzitrat, Glucuronolacton, Vitamine (z.B. Vitamin B6 und/oder Vitamin B12), Mineralstoffe, Aromastoffe, Nikotin, Niacin, Nicotinamid, Acetylsalicylsäure, Farbstoffe.

3. Beutel nach Anspruch 1 oder 2, enthaltend mindestens einen magensäureempfindlichen Wirkstoff.

4. Beutel nach einem der Ansprüche 1 bis 3, bei dem die Wirkstoffzusammensetzung so ausgebildet und beschaffen ist, dass es sich im Speichel während einer vorgegebenen Einwirkungsdauer, vorzugsweise im Bereich von bis zu einer Stunde, vorzugsweise von 1 bis 40 Minuten, vorzugsweise von 5 bis 30 Minuten, auflöst, wodurch bis zum Ende der vorgegebenen Einwirkungsdauer eine Freisetzung der Wirkstoffzusammensetzung erfolgt.

5. Beutel nach einem der Ansprüche 1 bis 4, der ein Granulat umfasst, das aus der Wirkstoffzusammensetzung besteht oder diese enthält.

6. Beutel nach einem der Ansprüche 1 bis 5, bei dem das Granulat Cellulosefaser-Pulpe umfasst.

7. Beutel nach einem der Ansprüche 1 bis 6, bei dem das Granulat Pflanzenfasern umfasst, die mit Wirkstoffen und/oder anderen Inhaltsstoffen beladen sind.

8. Beutel nach einem der Ansprüche 1 bis 7, bei dem das Granulat Pflanzenfasern umfasst, die Koffein und/oder Taurin und/oder andere Inhaltsstoffe originär enthalten.

9. Beutel nach einem der Ansprüche 1 bis 8, bei dem die Beutelhülle aus einem Vliesstoff besteht.

10. Beutel nach Anspruch 9, bei dem der Vliesstoff cellulosische Fasern oder im Wesentlichen oder ausschließlich cellulosische Fasern umfasst.

11. Beutel nach Anspruch 10, bei dem die cellulosischen Fasern eine oder mehrere der folgenden Fasern umfassen: Viskosefasern, Lyocellfasern, Baumwollfasern.

12. Beutel nach einem der Ansprüche 9 bis 11, bei dem der Vliesstoff chemisch verfestigt ist.

13. Beutel nach einem der Ansprüche 9 bis 12, bei dem der Vliesstoff eine siegelfähige Komponente enthält.

14. Beutel nach einem der Ansprüche 9 bis 13, bei dem die Permeabilität des Vliesstoffes für Speichel insbesondere durch mindestens eine der nachfolgenden Maßnahmen eingestellt wird: Wahl des Vliesbildungsverfahrens, Wahl der Art, des Titers und des Querschnittes der Fasern, Wahl von Art und Menge des Bindemittels, Einstellung der Porengrößenverteilung und der Porendichte des Vliesstoffes durch Kompaktierung des Vliesstoffes.

15. Beutel nach einem der Ansprüche 1 bis 8, bei dem die Beutelhülle ein poröser Film ist.

16. Beutel nach einem der Ansprüche 1 bis 15, bei dem die Beutelhülle einen Aufdruck aus einer lebensmittelechten Farbe aufweist.

17. Beutel nach Anspruch 16, bei dem der Aufdruck, die Permeabilität des Materials der Beutelhülle und die Wirkstoffzusammensetzung so ausgebildet und beschaffen ist, dass aufgrund der Einwirkung von Speichel der Aufdruck von der Beuteloberfläche zunehmend abgelöst und gerade dann nicht mehr visuell wahrnehmbar ist, wenn die Wirkstoffzusammensetzung durch den Speichel in einem vorgegebenen Ausmaß, vorzugsweise vollständig oder im Wesentlichen, aus dem Beutel extrahiert ist und so den Verbrauchsstatus des Wirkstoffs sichtbar macht.

18. Beutel nach Anspruch 16 oder 17, bei dem die Hydrophilie/Hydrophobie des Vliesstoffes durch den Aufdruck eingestellt ist.

19. Verfahren zum oralen Aufnehmen eines Wirkstoffes, bei dem ein oraler Beutel gemäß einem der Ansprüche 1 bis 18 im Mundvorhof platziert, mittels Speichel die Wirkstoffzusammensetzung aus dem oralen Beutel extrahiert, über die Schleimhäute und/oder den Magen aufgenommen wird und in den Blutkreislauf des Anwenders gelangt und seine stimulierende Wirkung entfaltet.

20. Verfahren nach Anspruch 19, bei dem mittels des Speichels zugleich die Wirkstoffzusammensetzung und die Farbe des Aufdruckes aus der Beutelhülle herausgelöst wird, wobei gerade dann, wenn der Aufdruck auf der Beuteloberfläche nicht mehr visuell wahrnehmbar ist, die Wirkstoffzusammensetzung erschöpft ist.

21. Verwendung eines Beutels gemäß einem der Ansprüche 1 bis 18 beim Langstreckenlauf, Klettern oder einem anderen Ausdauer- oder Trendsport, bei dem der Konsum von stimulierenden Getränken oder anderen Darreichungsformen stimulierender Mittel nicht möglich oder erschwert ist, bei der der Beutel im Mundvorhof platziert, mittels Speichel die Wirkstoffzusammensetzung aus dem oralen Beutels extrahiert, über die Schleimhäute und/oder den Magen aufgenommen wird und in den Blutkreislauf des Anwenders gelangt und ihre stimulierende Wirkung entfaltet.
